# EUROPEAN PATENT APPLICATION

(11) **EP 2 930 196 A1**
(43) Date of publication of application: **14.10.2015**
(21) Application number: 13860360.0
(22) Date of filing: 04.12.2013
(51) Int. Cl.: C08G 18/10, C08G 18/50, C09K 3/00

(54) **COPOLYMERIZED POLYURETHANE RESIN AND AQUEOUS EMULSION**

(30) Priority: 05.12.2012 JP 2012266242
(71) Applicant: Toyobo Co., Ltd., Osaka-shi Osaka 530-8230 (JP)
(72) Inventor: SHINOZAWA, Naoko, Otsu-shi Shiga 520-0292 (JP); KIZUMOTO, Hirotoshi, Otsu-shi Shiga 520-0292 (JP)
(74) Representative: Müller-Boré & Partner Patentanwälte PartG mbB
(86) International application number: PCT/JP2013/082550
(87) International publication number: WO 2014/088023

(57) **Abstract**

There is provided a method, copolymerizing a polyether segment in a molecular end of polyurethane, and being allowed the polymer to be phase-transitioned smoothly from a high-concentration organic solvent solution phase to an aqueous phase, for reducing the organic solvent solution significantly in emulsification step by acetone method and shortening the process time.

Since a polyurethane resin of the present invention has a polyether segment copolymerized in the molecule, the solution viscosity of an organic solvent solution is reduced effectively. Further, since the ether segment exists at the molecular end, the polyurethane resin produced in an organic solvent phase during a water dispersion element production process is phase-transitioned smoothly from a high-concentration organic solvent solution phase to an aqueous phase. As a result, provided is the polyurethane resin in which the amount of an organic solvent to be distilled off can be reduced, and thus, the efficiency of production can be improved as a result of reduction in process time, environmental loads can be reduced as a result of reduction in the amount of organic solvent waste, and a stable water dispersion element can be formed.

## Description

### TECHNICAL FIELD

The present invention relates to a hydrophilic polyurethane resin having a sulfonic acid salt group and/or carboxyl salt group in the molecule and which is dispersible in water without the presence of an emulsifier. In particular, the present invention relates to a copolymerized polyurethane resin, in which the polyurethane resin has a polyether chain at the molecular end and on the side chain, so that the solution viscosity of an organic solvent solution significantly decreases, the amount of organic solvent waste can be reduced in a water dispersion step, and obtained emulsion particles are made more particulate and stabilized. Furthermore, the present invention relates to an aqueous emulsion and an adhesive composition including the copolymerized polyurethane resin.

### BACKGROUND ART

In recent years, paints, inks, coating agents, adhesives, pressure-sensitive adhesives, sealing agents, primers, and various kinds of treatment agents for textile products and paper products have been shifting from previous organic solvent systems to aqueous systems, high-solid systems and powder systems in view of the environmental issue. Above all, aqueous systems with water dispersions are most versatile and promising from the viewpoint of good workability and protection of working environments.

The most general methods for emulsifying a polyurethane resin have been conventionally published in Scientific Literature-1. The methods are roughly classified into a case using an emulsifier when being emulsified or suspended in water and a case where a hydrophilic monomer raw material is self-dispersed by incorporating into a polyurethane molecular chain. In recent years, from the viewpoint of being more environment-friendly, a self-dispersion type aqueous polyurethane resin that does not contain an emulsifier tends to be preferred. As a method for preparing a water dispersion for the self-dispersion type aqueous polyurethane, a very common method called "the acetone method" is described in Patent Document 3 and also in Non-Patent Document 1. A copolymerized polyurethane resin is allowed to have a high molecular weight by chain-extending in an inert hydrophilic organic solvent having a relatively low boiling point such as acetone, methyl ethyl ketone and tetrahydrofuran before being dispersed in water. Subsequently, deionized water is stirred and blended, the mixture is homogeneously mixed, and the organic solvent is then distilled off. In this process, the smaller the amount of organic solvent is distilled off, the process time is shortened, thereby improving the production efficiency, or decreasing the amount of a waste solvent, and hence, it can be said to be in accordance with environmental harmony.

In addition, it is preferred that a synthetic resin itself that forms a water dispersion be also biodegradable or composed primarily of a plant-derived raw material from the viewpoint of prevention of environmental pollution after dumping.

Polylactic acid resins and polylactic acid-based resins having a polylactic acid segment are considered as preferred materials from the viewpoint of prevention of environmental pollution because they can be produced from plant-derived raw materials and are biodegradable. As a water dispersion element of the polylactic acid-based resin, there has been proposed a self-emulsifying dispersion element which does not require an emulsifier for dispersing in water because the polylactic acid-based resin itself has an emulsifying function as described in Patent Document 1. By introducing a sulfonic acid salt group by copolymerization with a polylactic acid segment, a water dispersion having a smaller emulsion particle size and having better storage stability is obtained as compared to a conventional forcibly emulsified dispersion element using an emulsifier. It has also been proposed that an adhesive excellent in adhesion can be provided by using no emulsifier as described in Patent Document 2.

### RELATED-ART DOCUMENTS

### PATENT DOCUMENTS

Patent Document 1: WO-A-2010-053065
Patent Document 2: JP-A-2010-275441
Patent Document 3: JP-B-hei-7-53788

### NON-PATENT DOCUMENTS

Non Patent Document 1: Progress in Organic Coatings, 9 (1981)281-340 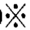 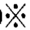 ) Description part about the acetone method

### SUMMARY OF THE INVENTION

### PROBLEMS TO BE SOLVED BY THE INVENTION

However, while the above polylactic acid-based resins have an advantage of excellent biodegradability, a finely particulate and stable water dispersion element cannot be obtained due to the following reason. The polylactic acid-based resin is disadvantageously easily decomposed by hydrolysis during the production process of water dispersion element. In order to suppress this hydrolysis reaction, in "the acetone method" described above, the steps from a step of stirring and blending deionized water in a polyurethane resin solution polymerized in the organic solvent to a step of successively distilling off an organic solvent component after homogenization are needed to be carried out under especially low temperature conditions, for example, at a temperature of 50°C or lower. However, the solution viscosity of an organic solvent solution is high under such low temperature conditions, a stirring blade dose not rotate or a sufficient rotation speed of the stirring blade cannot be obtained, and hence, an organic solvent phase and an aqueous phase are not homogeneously stirred. As a result, the polyurethane resin produced in the organic solvent cannot be phase-transitioned smoothly into an aqueous phase, and a finely particulate and stable emulsion having a narrow particle size distribution cannot be obtained. In order to solve this problem, it has heretofore been addressed by simply lowering the dilution concentration of a polyurethane organic solvent solution, and as a result, the amount of organic solvent solution to be distilled off during the water dispersion production process increases, leading to reduction in production efficiency and increase in environmental loads. Here, water is mixed in the organic solvent component that is distilled off at a high concentration, and hence the organic solvent cannot be reused as a urethane resin reaction solution. Although it is possible to reuse it as a diluting solvent after completion of the polymerization reaction of polyurethane resin, all the organic solvent that is distilled off and recovered cannot be reused in this method, and only a limited part thereof is reused.

The present invention has been made in view of circumstances of the conventional techniques described above. That is, an object to be achieved by the present invention is to provide a copolymerized polyurethane resin capable of forming a stable water dispersion element, and more preferably, by reducing the amount of organic solvent to be distilled off during a water dispersion element production process, to provide a polyurethane resin having a low viscosity even under low temperature conditions that allow improvement in production efficiency of water dispersion element and reduction in environmental loads, transitioning smoothly from an organic solvent solution having a high dilution concentration into water, and forming a finely particulate and stable emulsion having a narrow particle size distribution.

### MEANS FOR SOLVING THE PROBLEMS

The present inventors have conducted extensive studies, and resultantly found that the solution viscosity of an organic solvent solution of a polyurethane resin can be effectively reduced by introducing a polyether segment to the molecular end of polyurethane, and the polyurethane resin produced in the organic solvent during a water dispersion element production process is allowed to be phase-transitioned smoothly to an aqueous phase, leading to the present invention. That is, the present invention has the following constitutions.

(1) A copolymerized polyurethane resin which is obtained by extending a chain length of a prepolymer with a carboxylic acid group-containing diol (component D) and/or a tri- or higher functional polyol (component E), wherein the prepolymer is obtained by a reaction of a hydrophilic polyol (component A) containing a sulfonic acid salt group, a polyether (component B) having an active hydrogen only at one end, and an organic diisocyanate compound (component C), and has at least one isocyanate group in a molecule.
(2) The copolymerized polyurethane resin according to (1), wherein the component A is an aliphatic polyester polyol obtained by adding an aliphatic hydroxycarboxylic acid composed primarily of an L-lactic acid to a sulfonic acid salt group-containing polyol.
(3) The copolymerized polyurethane resin according to (1) or (2), which comprises an aliphatic hydroxycarboxylic acid component other than the aliphatic hydroxycarboxylic acid composed primarily of an L-lactic acid, the component being an ε-caprolactone residue or a D-lactic acid residue.
(4) The copolymerized polyurethane resin according to any one of (1) to (3), which comprises a sulfonic acid salt group having an acid value of not less than 50 eq/ton and not more than 500 eq/ton.
(5) The copolymerized polyurethane resin according to any one of (1) to (4), wherein a weight fraction of a lactic acid residue in the component A according to 1 is not less than 50% and not more than 90%.
(6) The copolymerized polyurethane resin according to any one of (1) to (5), which has a number average molecular weight of not less than 5000.
(7) An aqueous emulsion which is composed primarily of the copolymerized polyurethane resin according to any one of (1) to (6) and water.
(8) The aqueous emulsion according to (7), which does not contain a surfactant.
(9) The aqueous emulsion according to (7) or (8), which does not contain an organic solvent.
(10) An adhesive composition, wherein a curing agent having reactivity to a carboxyl group is blended in the aqueous emulsion according to any one of (7) to (9).
(11) A method for producing the aqueous emulsion according to any one of (7) to (9), comprising the following steps (A) to (C):
   (A) polymerizing a copolymerized polyurethane resin in a hydrophilic organic solvent;
   (B) adding a basic compound to a hydrophilic organic solvent solution of the obtained resin, followed by mixing; and
   (C) distilling off the hydrophilic organic solvent from a system after mixing of water.

### ADVANTAGEOUS EFFECTS OF THE INVENTION

Since a polyurethane resin of the present invention has a polyether segment copolymerized in the molecule, the solution viscosity of an organic solvent solution is reduced effectively. Further, since the ether segment exists at the molecular end, the polyurethane resin produced in an organic solvent phase during a water dispersion element production process is phase-transitioned smoothly from a high-concentration organic solvent solution phase to an aqueous phase. As a result, provided is the polyurethane resin in which the amount of an organic solvent to be distilled off can be reduced, and thus, the efficiency of production can be improved as a result of reduction in process time, environmental loads can be reduced as a result of reduction in the amount of organic solvent waste, and a stable water dispersion element can be formed.

### MODE FOR CARRYING OUT THE INVENTION

### <Copolymerized polyurethane resin>

A copolymerized polyurethane resin of the present invention is obtained by extending a chain length of a prepolymer with a carboxylic acid group-containing diol (component D) and/or a tri- or higher functional polyol (component E). The prepolymer is obtained by a reaction of a hydrophilic polyol (component A) containing a sulfonic acid salt group, a polyether (component B) having an active hydrogen only at one end, and an organic diisocyanate compound (component C), and has at least one isocyanate group in the molecule.

### <Hydrophilic polyol (component A) containing a sulfonic acid group>

The hydrophilic polyol containing a sulfonic acid group, which is the component A, is obtained by the following method.

That is, the hydrophilic polyol containing a sulfonic acid group is prepared by a polycondensation of 5-sodium sulfoisophthalic acid or its dimethyl ester compound and various dibasic acid compounds with various polyol compounds. Examples of the various dibasic acid components may include aromatic dibasic acids such as terephthalic acids, isophthalic acids, and orthophthalic acids; aliphatic dibasic acids such as succinic acids, glutaric acids, adipic acids, azelaic acids, sebacic acids, and dodecanoic acids; and alicyclic dibasic acids such as 1,2-cyclohexanedicarboxylic acids, 1,3-cyclohexanedicarboxylic acids and 1,4-cyclohexanedicarboxylic acids. Among these dibasic acids, aliphatic dibasic acids such as succinic acids, glutaric acids, adipic acids, azelaic acids, sebacic acids and dodecanoic acids are preferred from the viewpoint of reduction in environmental loads because biodegradability function is easily developed. Furthermore, succinic acids and sebacic acids are more preferred since these are plant-derived raw materials. Examples of the various polyol compounds may include aliphatic diols such as ethylene glycol, 1,2-propylene glycol, 1,3-propylene glycol, 1,2-butylene glycol, 1,3-butylene glycol, 2,3-butylene glycol, 1,4-butylene glycol, 2-methyl-1,3-propylene glycol, neopentyl glycol, 3-methyl-1,5-pent,anediol, 2,2,4-trimethyl-1,3-pentanediol, 2,4-diethyl-1,5-pentanediol, 2-ethyl-1,3-hexanediol, 2,2-dimethyl-3-hydroxypropyl-2',2'-dimethyl-3-hydroxypropanate, 2-n-butyl-2-ethyl-1,3-propanediol, 3-ethyl-1,5-pentanediol, 3-propyl-1,5-pentanediol, 2,2-diethyl-1,3-propanediol, 3-octyl-1, and 5-pentanediol; alicyclic glycols such as 1,3-bis (hydroxymethyl) cyclohexane, 1,4-bis (hydroxymethyl) cyclohexane, 1,4-bis (hydroxyethyl) cyclohexane, 1,4-bis (hydroxypropyl) cyclohexane, 1,4-bis (hydroxymethoxy) cyclohexane, 1,4-bis (hydroxyethoxy) cyclohexane, 2,2-bis (4-hydroxymethoxy cyclohexyl) propane, 2,2-bis (4 hydroxyethoxy cyclohexyl) propane, bis (4-hydroxycyclohexyl) methane, 2,2-bis (4-hydroxycyclohexyl) propane, and 3(4),8(9)-tricyclo [5.2.1.0^{2.6}] decanedimethanol; and aromatic diols such as ethylene oxide adducts to bisphenol A. Among these glycol compounds, 1,3-propylene glycol is a plant-derived material and preferable from the viewpoint of reduction in environmental loads.

Alternatively, the hydrophilic polyol containing a sulfonic acid group, which is the component A, can be also obtained by the following method. That is, the hydrophilic polyol containing a sulfonic acid group is obtained by adding an aliphatic hydroxycarboxylic acid to a polyol compound (component A) containing a sulfonic acid residue. Examples of aliphatic hydroxycarboxylic acids may include L-lactic acid, D-lactic acid, γ-butyrolactone, δ-valerolactone, ε-caprolactone, glycolic acid, and a copolymer composition of two or more of these. A copolymer composition of L-lactic acid and ε-caprolactone is preferred in respect of versatility of a raw material and the properties of a polymeric polyol to be produced.

The polyol compound (component A) having a sulfonic acid salt group residue is preferably a polyester diol compound having a chemical structure obtained by a condensation reaction of a dibasic acid having a sulfonic acid salt group and/or a glycol component having a sulfonic acid salt group and another dibasic acid and/or another glycol from the viewpoint of solubility in a general solvent. Examples of the dibasic acid having a sulfonic acid salt group may include isophthalic acid-5-sulfonic acid salts, terephthalic acid-3-sulfonic acid salts and 1,8-naphthalenedicarboxylic anhydride-4-sulfonic acid salts, and one or more selected from those salts are preferred. A diester compound of the above-mentioned dibasic acid may be used, and a diester compound of at least one dibasic acid selected from isophthalic acid-5-sulfonic acid salts, terephthalic acid-3-sulfonic acid salts and 1,8-naphthalenedicarboxylic anhydride-4-sulfonic acid salts is preferred. A diester compound of the above-mentioned dibasic acid and a diol such as ethylene glycol or propylene glycol can be used as a glycol component having a sulfonic acid salt group. In particular, a compound represented by the following general formula (1) is especially preferred from the viewpoint of availability of a raw material and solubility in a general solvent. 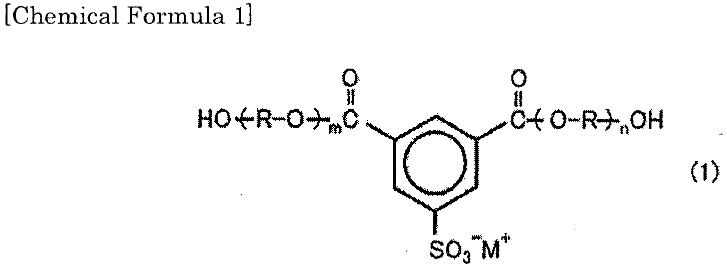 wherein R represents a divalent saturated aliphatic hydrocarbon group having 2 to 5 carbon atoms; M represents Li, Na, K, quaternary ammonium or quaternary phosphonium; m represents a positive integer; n represents a positive integer; and m + n represents an integer of 2 to 10.

In the general formula (1), the quaternary ammonium is preferably one represented by the following general formula (2), and the quaternary phosphonium is preferably one represented by the following general formula (3). 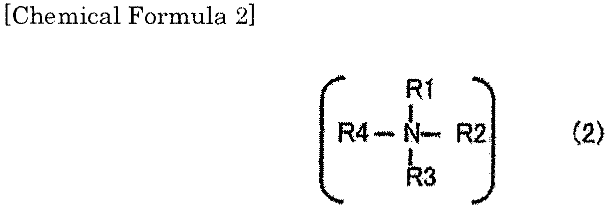 wherein R1, R2, R3 and R4 may be the same or different, and each represent a hydrocarbon group having 1 to 18 carbon atoms. 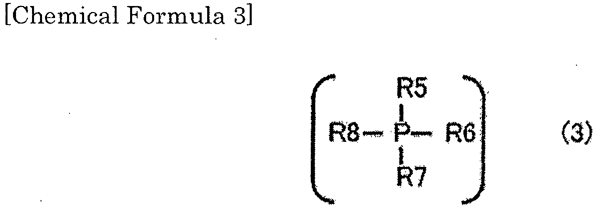 wherein R5, R6, R7 and R8 may be the same or different, and each represent a hydrocarbon group having 1 to 18 carbon atoms.

The number average molecular weight of the hydrophilic polyol containing a sulfonic acid salt group used in the copolymerized polyurethane resin of the present invention is preferably 500 to 6000. When it is 500 or less, solubility in a general solvent is insufficient, and when it is 6000 or more, reactivity with an organic diisocyanate component (component C) decreases.

### <Polyether (component B) having an active hydrogen only at one end>

Examples of the polyether (component B) having an active hydrogen only at one end may include a general-purpose polyalkylene oxide such as polyethylene glycol (PEG), poly-1,2-propylene glycol (PPG), and poly-n-butylene glycol (PTMG). Of those, polyethylene glycol is preferable in respect of versatility of a raw material and capability of forming more homogeneous and finely particulate emulsion particles. The active hydrogen means a functional group having reaction activity with an isocyanate group, and specific examples thereof include an alcoholic or phenolic hydroxyl group, an amino group, a mercapto group, and a carboxyl group. Taking both of versatility of a raw material and reaction activity with an isocyanate group in consideration, an alcoholic hydroxyl group is most preferable. The phrase "having an active hydrogen only at one end" specifically means having a hydroxyl group only at one end of a molecular chain. The molecular weight of these polyethers having an active hydrogen only at one end is 300 to 4000, preferably 500 to 2000, and further preferably 500 to 1000. Polyethers having a molecular weight of 300 or less are not preferred since versatility of a raw material cannot be obtained, and the molar number of molecules per given weight increases, so that the molecular weight of polyurethane resin becomes hard to increase. On the other hand, when the molecular weight exceeds 4000, the reactivity of a hydroxyl group at the molecular end becomes poor so that unreacted remaining polyether components increase, and as a result, a stable emulsion cannot be formed at the time of dispersion in water. The copolymer weight ratio of the component B in the copolymerized polyurethane resin of the present invention is 2 to 10 wt%, preferably 2 to 7 wt%, and most preferably 2 to 5 wt%. When it exceeds 10 wt%, the number of molecules of monofunctional polyether increases, and the molecular weight of the copolymerized polyurethane becomes hard to increase. On the other hand, when it is less than 2 wt%, the effects of the present invention, that is, the solution viscosity of a high-concentration organic solvent solution of the copolymerized polyurethane resin is effectively reduced, and a smooth phase transition from a high-concentration organic solvent solution phase to an aqueous phase hardly occurs during a water dispersion step. As a result, a stable emulsion is not formed. Alternatively, in order to obtain a stable emulsion, it is necessary to raise the dilution ratio of the copolymerized polyurethane organic solvent solution, and the use amount of an organic solvent is thus increased.

### <Diisocyanate compound (component C)>

The diisocyanate compound (component C) is an essential component of the copolymerized polyurethane resin of the present invention. Examples of the diisocyanate compound include aromatic diisocyanates such as 2,4-tolylene diisocyanate, 2,6-tolylene diisocyanate, p-phenylene diisocyanate, 4,4'-diphenylmethane diisocyanate, m-phenylene diisocyanate, 3,3'-dimethoxy-4,4'-biphenylene diisocyanate, 2,6-naphthalene diisocyanate, 3,3'-dimethyl-4,4'-biphenylene diisocyanate, 4,4'-diphenylene diisocyanate, 4,4'-diisocyanate diphenyl ether, 1,5-naphthalene diisocyanate and m-xylene diisocyanate; and aliphatic diisocyanates and cycloaliphatic diisocyanates such as hexamethylene diisocyanate, isophorone diisocyanate, hydrogenated products of 4,4'-diphenylmethane diisocyanate and hydrogenated products of m-xylene diisocyanate. Among them, 2,4-tolylene diisocyanate, 4,4'-diphenylmethane diisocyanate and hexamethylene diisocyanate are preferred from the viewpoint of versatility.

### <Carboxylic acid group-containing diol (component D)>

The carboxylic acid group-containing diol (component D) is an essential copolymerization component of the copolymerized polyurethane resin of the present invention. The diol compound (component D) has at least one carboxyl group per molecule. Specific examples thereof may include dimethylol propionic acid, dimethylol butanoic acid and glyceric acid. Of these, dimethylol propionic acid is most preferable from the viewpoint of versatility of a raw material. By using the component D as a copolymerization component, a pendant carboxyl group is introduced into the copolymerized polyurethane resin of the present invention, and hence, an effect of improving water dispersibility and an effect of improving reactivity with a curing agent are exhibited. In the present invention, the pendant carboxyl group refers to a carboxyl group present at a site other than the end of a polymer main chain.

The copolymerization ratio of the diol compound (component D) is preferably 1 to 6%, more preferably 1 to 5% in terms of the weight fraction of the (B) residue where the weight fraction of the (A) residue is 100%. When the copolymerization ratio of the component D is excessively high, stability of particles of the obtained emulsion tends to be deteriorated, and when the copolymerization ratio of the component D is excessively low, reactivity with a curing agent is deteriorated, so that sufficient bonding strength tends not to be obtained.

When a polyol (component E) having three or more per molecule is used, a branched structure can be formed in the copolymerized polyurethane resin of the present invention, so that an effect of easily increasing the molecular weight is exhibited. Examples of the polyol having three or more hydroxyl groups per molecule may include aliphatic polyol compounds such as trimethylolpropane, glycerin and pentaerythritol. When the polyol compound is copolymerized within the bounds of not causing the obtained copolymerized polyurethane resin to gel, the molecular weight of the copolymerized polyurethane resin is easily increased, and reactivity with a curing agent can be improved. Among those polyols, trimethylolpropane, which has a small molecular weight, is preferred because it can keep the biomass degree relatively high. The copolymerization ratio of the polyol compound is preferably not less than 0.1 mol% and not more than 5 mol%, further preferably not less than 0.5 mol% and not more than 3 mol% based on the total amount of the hydrophilic polymeric polyol (component A) containing a sulfonic acid group and having the number average molecular weight of 500 to 6000, the polyether (component B) having an active hydrogen only at one end, the organic diisocyanate compound (component C), and the carboxylic acid group-containing diol (component D), which form the copolymerized polyurethane resin of the present invention.

The number average molecular weight of the copolymerized polyurethane resin of the present invention is not particularly limited, but is preferably not less than 5,000 and less than 80,000. It is more preferably not less than 10,000 and less than 50,000, further preferably not less than 15,000 and less than 40,000. When the number average molecular weight is excessively low, the number of sulfonic acid metal salt groups per molecule of the copolymerized polyurethane resin decreases, so that it tends to become difficult to form stable emulsion particles, and the resin tends to become fragile when molded into a thin film. On the other hand, when the number average molecular weight is excessively high, it is difficult to obtain a homogeneous emulsion.

The copolymerized polyurethane resin of the present invention has an acid value, and the acid value is more preferably not less than 50 eq/ton and not more than 500 eq/ton, further preferably not less than 80 eq/ton and not more than 300 eq/ton, still further preferably not less than 90 eq/ton and not more than 150 eq/ton. A copolymerized polyurethane resin having an acid value in the above-mentioned range is excellent in water dispersibility, and has a good balance between curability and water resistance when used as an adhesive.

The copolymerized polyurethane resin of the present invention does not need to have a sulfonic acid salt group, but exhibits an effect of improving water dispersibility in particular when having a sulfonic acid salt group in a concentration of not less than 50 eq/ton and not more than 500 eq/ton. The concentration of the sulfonic acid salt group is more preferably not less than 80 eq/ton and not more than 300 eq/ton, further preferably not less than 100 eq/ton and not more than 200 eq/ton. When the sulfonic acid metal salt group concentration is excessively low, the particle size of water dispersion particles formed increases, leading to deterioration of storage stability and coating suitability. When the sulfonic acid metal salt group concentration is excessively high, the solution viscosity of a polyurethane solution increases, so that it becomes difficult for the polymerization reaction to proceed. The coating suitability mentioned here refers to such a property that when an emulsion solution is applied onto a base and subsequently dried, a smooth coating layer excellent in transparency is obtained. When the coating suitability is poor, the surface of the dried coating film is roughened, leading to deterioration of transparency, or a film formation property itself is not obtained, and hence, a coating layer is not formed but tattered film chips are formed.

When the diisocyanate compound to be used for the copolymerized polyurethane resin of the present invention is partially replaced with a tri- or higher functional polyisocyanate, the molecular weight of the copolymerized polyurethane resin can be easily increased, and reactivity with a curing agent can be improved. However, when the ratio of replacement with a trifunctional polyisocyanate is excessively low, the above-described effects are not exhibited, and when the ratio of replacement is excessively high, gelation of the copolymerized polyurethane resin occurs. Therefore, the ratio of replacement with a tri- or higher functional polyisocyanate is preferably not less than 0.1 mol% and not more than 5 mol%, further preferably not less than 0.5 mol% and not more than 3 mol%. Examples of the preferred tri- or higher functional polyisocyanate may include adducts of three molecules of tolylene diisocyanate or three molecules of 1,6-hexane diisocyanate with respect to one molecule of trimethylolpropane or glycerin, and compounds having an isocyanurate ring formed of three molecules of 1,6-hexane diisocyanate.

### <Other copolymerization components>

It may be possible to improve toughness of a coating film by copolymerizing a small amount of an aminoalcohol compound or a diamine compound with the copolymerized polyurethane resin of the present invention. Compounds having a relatively low molecular weight, such as N-methylmonoethanolamine and ethylenediamine, are preferred because they can keep the biomass degree relatively high.

### < Aqueous emulsion>

The aqueous emulsion of the present invention is an aqueous emulsion composed primarily of the copolymerized polyurethane resin of the present invention and water. Here, the phrase "composed primarily of" means that 50% by weight or more of a solid that forms the emulsion is composed of the copolymerized polyurethane resin of the present invention, and 50% by weight or more of a medium that forms the emulsion is composed of water.

The aqueous emulsion of the present invention may contain an organic solvent, but in a particularly preferred embodiment of the present invention, an aqueous emulsion that does not contain an organic solvent can be formed. The aqueous emulsion of the present invention may contain a surfactant, but in a particularly preferred embodiment of the present invention, an aqueous emulsion that does not contain a surfactant can be formed. Further, in a particularly preferred embodiment of the present invention, an aqueous emulsion that does not contain both of an organic solvent and a surfactant can be formed.

The average particle size of the emulsion of the present invention is not particularly limited, but is preferably not more than 200 nm. When the average particle size is large, storage stability of the emulsion is poor, so that the resin tends to be easily precipitated during storage. Further, the coating suitability is deteriorated, so that a transparent and smooth coating layer tends to be hardly formed.

The aqueous emulsion of the present invention can be prepared by a method in which first a copolymerized polyurethane resin is polymerized in a hydrophilic organic solvent such as methyl ethyl ketone (hereinafter, abbreviated as MEK in some cases), acetone or tetrahydrofuran, a basic substance such as an amine is then added to and mixed with the resulting hydrophilic organic solvent solution of resin, water is then mixed, and the hydrophilic organic solvent is distilled off from the system. However, the method for preparing the emulsion is not limited to this method. The basic substance such as an amine may be added and stored immediately after polymerization, or may be added immediately before preparation of the emulsion. Other hydrophilic organic solvents such as lower alcohols such as methanol, ethanol or isopropanol may be mixed before water is mixed with the resulting hydrophilic organic solvent solution of resin.

In a particularly preferred embodiment of the present invention, the copolymerized polyurethane resin of the present invention can be stably stored as a dispersion liquid with polymer particles dispersed in an aqueous medium that does not contain an organic solvent, and can be applied to a base. On the other hand, coating suitability to a specific base may be improved by blending a lower monoalcohol such as methanol, ethanol, n-propanol or isopropanol, an acetate such as ethyl acetate or butyl acetate, or an amide-based solvent such as dimethylformamide or dimethylacetamide in any concentration as a cosolvent.

### <Adhesive composition>

The emulsion of the present invention itself can be used as an adhesive and a coating agent. When a curing agent is further blended, bonding strength, solvent resistance and water resistance are improved. As the curing agent, polyfunctional compounds having reactivity to a carboxyl group are preferred, and specifically polyfunctional carbodiimide, polyfunctional isocyanate, polyfunctional epoxy, polyfunctional oxazoline, or the like are particularly effective. When instantaneous curability is particularly required, polyfunctional carbodiimide is preferred.

### EXAMPLES

Below, by way of examples, the present invention will be more specifically described. However, the present invention is not limited by the following examples. It is naturally understood that modifications may be properly made and practiced within the scope adaptable to the meaning described above and below. All of these are included in the technical scope of the present invention.

Measurement and evaluation methods employed in this specification are as follows.

### (1) Quantitative determination of sulfonic acid sodium salt group concentration

A sodium concentration was quantitatively determined as a measure for estimating the concentration of sulfonic acid metal salt groups in a sulfonic acid sodium-containing diol raw material and a copolymerized polyurethane resin. Sodium was quantitatively determined in the following manner: a sample was heated to be carbonized and converted into ashes, and residual ash components were formed into a hydrochloric acid acidic solution, followed by performing quantitative determination using an atomic absorption method. The sulfonic acid metal salt group concentration was calculated based on the assumption that all the detected sodium would be derived from sulfonic acid sodium salt groups contained in the sample. The unit of concentration was the number of equivalents (eq/ton) per 10⁶ g (i.e. 1 ton) of the resin sample.

### (2) Acid value of sulfonic acid salt group-containing diol oligomer

In 20 ml of tetrahydrofuran was dissolved 0.2 g of a sample (80% toluene solution), followed by performing measurement with a 0.1 N-NaOH ethanol solution using phenolphthalein as an indicator. The measured value is shown as the number of equivalents (eq/ton) in 10⁶ g of resin solid components.

### (3) Polymer composition

A sample was dissolved in a mixed solvent of chloroform-d/DMSO-d₆ = 1/1, and a resin composition ratio was determined by ¹H-NMR analysis using a nuclear magnetic resonance analyzer (NMR) "GEMINI 400-MR" manufactured by Varian, Inc.

### (4) Number average molecular weight

A sample was dissolved in tetrahydrofuran so as to achieve a sample concentration of about 0.5% by weight, the solution was filtered through a membrane filter made of polytetrafluoroethylene having a pore size of 0.5 µm, and the filtrate was used as a sample for measurement. Using a gel permeation chromatograph (GPC) 150C manufactured by Waters Corporation, measurement was performed at a flow rate of 1 ml/minute using an RI detector with tetrahydrofuran as a carrier solvent. As a column, three columns: Shodex KF-802, KF-804 and KF-806 manufactured by Showa Denko K.K. were coupled to one another, and the column temperature was set to 30°C. A polystyrene standard substance was used as a molecular weight standard sample.

### (5) Glass transition temperature

5 mg of a sample was put in a sample pan made of aluminum and was sealed, and measurement was performed while the temperature was elevated to 200°C at a temperature elevation rate of 20°C/minute using a differential scanning calorimeter DSC-220 manufactured by Seiko Instruments Inc. The temperature at an intersection of an extended line of the baseline below the glass transition temperature and a tangential line showing the maximum gradient in the transition part was defined as a glass transition temperature.

### (6) Biomass degree

A copolymerization ratio of a lactic acid unit in the copolymerized polyurethane resin was calculated from the NMR analysis value of the polymer composition described above, and the obtained value was defined as a biomass degree (%).

### (7) Average particle size of emulsion particles

Using Beckman Coulter LS 13 320, an average diameter from an arithmetic average based on a volume statistic from 0.040 µm to 2000 µm was measured, and the measured value was employed as an average particle size of emulsion particles. Measurements of the average particle size were performed after one day than a day that the emulsion was prepared (in the early stage) and after the emulsion was statically stored in a sealed state in a constant-temperature chamber at room temperature (23°C) for 30 days.

### (8) Measurement of solution viscosity of copolymerized polyurethane

A resin solid concentration 50 wt% solution of the obtained copolymerized polyurethane was placed in a mayonnaise bottle of 225 ml, was left to stand in a constant-temperature water phase of 25°C for 1 hour or longer, and measurement was then performed using a Brookfield viscometer.

The abbreviations of compounds shown in the text and the tables in Examples below represent the following compounds.
HDI: hexamethylene diisocyanate
IPDI: isophorone diisocyanate
DMPA: dimethylol propionic acid
DMBA: dimethylol butanoic acid
MH-PEG#500: polyethylene glycol methoxy-blocked at one end, number average molecular weight: 500
MH-PEG#1000: polyethylene glycol methoxy-blocked at one end, number average molecular weight: 1000
PEG#1000: typical PEG#1000 (typical polyethylene glycol having hydroxyl groups at both ends, number average molecular weight: 1000)
TMP: trimethylolpropane
PETOL: pentaerythritol
PCL: polycaprolactone diol, number average molecular weight: 2000
TEA: trimethylamine
MEK: methyl ethyl ketone
IPA: isopropyl alcohol

### Synthesis Example-1: Synthesis of Copolymerized Polyurethane Resin (PLU-1-1)

### · Polyol compound (component A) having a sulfonic acid salt group residue

### Synthesis of sulfonic acid sodium salt group-containing diol mixture-X

In a 1 L glass flask equipped with a thermometer, a stirring rod and a Liebig condenser tube were added 408 parts of 2,2-dimethyl-3-hydroxypropyl-2',2'-dimethyl-3'-hydroxypropanate, 197 parts of dimethyl 5-sodiumsulfoisophthalate and 0.1 parts of a tetrabutyl titanate (TBT) catalyst. The mixture was stirred/reacted for 1 hour at 190°C while methanol was distilled off, and thereafter the temperature was elevated at a rate of 10°C per hour to reach 230°C. After it was confirmed that methanol was completely distilled at 230°C, the temperature was elevated to 250°C, the mixture was stirred under reduced pressure for 10 minutes, and the reaction product was cooled to 100°C. Then, 141 parts of toluene was mixed, and the mixture was homogeneously dissolved. The sulfonic acid metal salt group concentration and the acid value of the obtained 80 wt% toluene solution were as follows.
Sulfonic acid metal salt group concentration: 948 eq/ton solution
Acid value: 23 eq/ton solution

### 2) Synthesis of hydrophilic polymeric polyol A-1 (component A) containing a sulfonic acid group

In a 1 L glass flask equipped with a thermometer, a stirring rod and a Liebig condenser tube were added 100 parts of the sulfonic acid sodium salt group-containing diol mixture-X (80 wt% toluene solution), 285 parts of L-lactide, 166 parts of ε-caprolactone, 190 parts of toluene, 0.10 parts of tin octylate as a catalyst and 0.25 parts of ethyl diethyl phosphonoacetate as a catalyst deactivator, and the reaction system was heated to 180°C while being subjected to toluene azeotropic dehydration under a nitrogen gas stream, and was stirred for 3 hours. Thereafter, the system was decompressed to distill off an unreacted residual monomer. About 20 minutes later, decompression was released after the unreacted monomer stopped to be distilled, and the system was cooled to 120°C or lower under a nitrogen gas stream and dissolved in toluene to obtain a 82 wt% toluene solution. The number average molecular weight of the obtained poly (hydroxycarboxylic acid) diol-A-1 was 2800.

### 3) Synthesis of copolymerized polyurethane resin (PLU-1-1)

In a 1 L glass flask equipped with a thermometer, a stirring rod and a condenser, 122 parts of a 82 wt% toluene solution of the hydrophilic polymeric polyol-A-1 containing a sulfonic acid group and 40 parts of MEK were added and homogeneously mixed. Then, 11.4 parts of HDI was added and homogeneously mixed, and the system was heated to 70°C. 0.02 parts of dibutyltin dilaurate was added as a reaction catalyst, and the mixture was reacted at 70°C for 2 hours. Next, 1.7 parts of dimethylol propionic acid was added, and the mixture was further reacted while stirring for 3 hours, followed by adding 6 parts of MH-PEG#1000 (UNIOX M-1000 manufactured by NOF Corporation). The mixture was reacted at 70°C for 2 hours, followed by adding 1.7 parts of trimethylolpropane, and the mixture was further reacted for 3 hours and then diluted with 60 parts of MEK to terminate the reaction. For the obtained copolymerized polyurethane resin having a solid concentration of 50 wt%, the resin composition, the number average molecular weight and the biomass degree were measured, and the results are shown in Table 1. Moreover, the solution viscosity was measured, and the result is shown in Table 2.

### Synthesis Example-2: Synthesis of Copolymerized Polyurethane Resin (PLU-1-2)

Synthesis was conducted in the same manner as in the above synthesis of PLU-1-1 except that the amount of HDI was changed to 9.4 parts when producing the copolymerized polyurethane resin in 3). For the obtained copolymerized polyurethane resin having a solid concentration of 50 wt%, the resin composition, the number average molecular weight and the biomass degree were measured, and the results are shown in Table 1. Moreover, the solution viscosity was measured, and the result is shown in Table 2.

### Synthesis Example-3: Synthesis of Copolymerized Polyurethane Resin (PLU-2)

In a 1 L glass flask equipped with a thermometer, a stirring rod and a condenser, 122 parts of a 82 wt% toluene solution of the hydrophilic polymeric polyol A-1 (component A) containing a sulfonic acid group obtained in Example-1 and 40 parts of MEK were added and homogeneously mixed. Then, 11.8 parts of HDI was added and homogeneously mixed, and the system was heated to 70°C. 0.02 parts of dibutyltin dilaurate was added as a reaction catalyst, and the mixture was reacted at 70°C for 2 hours. Next, 1.7 parts of dimethylol propionic acid was added, and the mixture was further reacted while stirring for 3 hours, followed by adding 9 parts of MH-PEG#1000 (UNIOX M-1000 manufactured by NOF Corporation). The mixture was reacted at 70°C for 2 hours, followed by adding 1.7 parts of trimethylolpropane, and the mixture was further reacted for 3 hours and then diluted with 62 parts of MEK to terminate the reaction. For the obtained copolymerized polyurethane resin having a solid concentration of 50 wt%, the resin composition, the number average molecular weight and the biomass degree were measured, and the results are shown in Table 1. Moreover, the solution viscosity was measured, and the result is shown in Table 2.

### Synthesis Example-4: Synthesis of Copolymerized Polyurethane Resin (PLU-3)

In a 1 L glass flask equipped with a thermometer, a stirring rod and a condenser, 122 parts of a 82 wt% toluene solution of the hydrophilic polymeric polyol A-1 (component A) containing a sulfonic acid group obtained in Example-1 and 40 parts of MEK were added and homogeneously mixed. Then, 11.8 parts of HDI was added and homogeneously mixed, and the system was heated to 70°C. 0.02 parts of dibutyltin dilaurate was added as a reaction catalyst, and the mixture was reacted at 70°C for 2 hours. Next, 1.7 parts of dimethylol propionic acid was added, and the mixture was further reacted while stirring for 3 hours, followed by adding 3.3 parts of MH-PEG#500 (UNIOX M-550 manufactured by NOF Corporation). The mixture was reacted at 70°C for 2 hours, followed by adding 1.7 parts of trimethylolpropane, and the mixture was further reacted for 3 hours and then diluted with 56 parts of MEK to terminate the reaction. For the obtained copolymerized polyurethane resin having a solid concentration of 50 wt%, the resin composition, the number average molecular weight and the biomass degree were measured, and the results are shown in Table 1. Moreover, the solution viscosity was measured, and the result is shown in Table 2.

### Synthesis Example-5: Synthesis of Copolymerized Polyurethane Resin (PLU-4)

In a 1 L glass flask equipped with a thermometer, a stirring rod and a condenser, 122 parts of a 82 wt% toluene solution of the hydrophilic polymeric polyol A-1 (component A) containing a sulfonic acid group obtained in Example-1 and 40 parts of MEK were added and homogeneously mixed. Then, 8.9 parts of HDI was added and homogeneously mixed, and the system was heated to 70°C. 0.02 parts of dibutyltin dilaurate was added as a reaction catalyst, and the mixture was reacted at 70°C for 2 hours. Next, 6 parts of MH-PEG#1000 (UNIOX M-1000 manufactured by NOF Corporation) was added. The mixture was reacted at 70°C for 2 hours, followed by adding 1.6 parts of trimethylolpropane, and the mixture was further reacted for 3 hours and then diluted with 55 parts of MEK to terminate the reaction. For the obtained copolymerized polyurethane resin having a solid concentration of 50 wt%, the resin composition, the number average molecular weight and the biomass degree were measured, and the results are shown in Table 1. Moreover, the solution viscosity was measured, and the result is shown in Table 2.

### Synthesis Example-6: Synthesis of Copolymerized Polyurethane Resin (PLU-5)

### 1) Synthesis of hydrophilic polymeric polyol A-2 (component A) containing a sulfonic acid group

In a 1 L glass flask equipped with a thermometer, a stirring rod and a Liebig condenser tube were added 59 parts of DEIS* manufactured by Taoka Chemical Company, Limited as a sulfonic acid sodium salt group-containing diol mixture, 288 parts of L-lactide, 152 parts of ε-caprolactone, 200 parts of toluene, 0.10 parts of tin octylate as a catalyst and 0.25 parts of ethyl diethyl phosphonoacetate as a catalyst deactivator, and the reaction system was heated to 180°C while being subjected to toluene azeotropic dehydration under a nitrogen gas stream, and was stirred for 3 hours. Thereafter, the system was decompressed to distill off an unreacted residual monomer. About 20 minutes later, decompression was released after the unreacted monomer stopped to be distilled, and the system was cooled to 120°C or lower under a nitrogen gas stream and dissolved in toluene to obtain a 85 wt% toluene solution. The number average molecular weight of the obtained poly (hydroxycarboxylic acid) diol-A-2 was 3000.
(*DEIS: a condensate of sodium dimethyl 5-sulfonatoisophthalate and 2 mol times ethylene glycol)

### 2) Synthesis of Copolymerized Polyurethane Resin (PLU-5)

In a 1 L glass flask equipped with a thermometer, a stirring rod and a condenser, 118 parts of a 85 wt% toluene solution of the hydrophilic polymeric polyol-A-2 containing a sulfonic acid group and 64 parts of MEK were added and homogeneously mixed. Then, 23.2 parts of IPDI was added and homogeneously mixed, and the system was heated to 70°C. 0.02 parts of dibutyltin dilaurate was added as a reaction catalyst, and the mixture was reacted at 70°C for 2 hours. Next, 1.9 parts of dimethylol butanoic acid was added, and the mixture was further reacted while stirring for 3 hours, followed by adding 6 parts of MH-PEG#1000 (UNIOX M-1000 manufactured by NOF Corporation). The mixture was reacted at 70°C for 2 hours, followed by adding 2.4 parts of pentaerythritol, and the mixture was further reacted for 3 hours and then diluted with 51 parts of MEK to terminate the reaction. For the obtained copolymerized polyurethane resin having a solid concentration of 50 wt%, the resin composition, the number average molecular weight and the biomass degree were measured, and the results are shown in Table 1. Moreover, the solution viscosity was measured, and the result is shown in Table 2.

### Synthesis Example-7: Synthesis of Copolymerized Polyurethane Resin (PLU-6)

In a 1 L glass flask equipped with a thermometer, a stirring rod and a condenser, 118 parts of a 85 wt% toluene solution of the hydrophilic polymeric polyol A-2 (component A) containing a sulfonic acid group obtained in Synthesis Example-6 and 64 parts of MEK were added and homogeneously mixed. Then, 24.0 parts of IPDI was added and homogeneously mixed, and the system was heated to 70°C. 0.02 parts of dibutyltin dilaurate was added as a reaction catalyst, and the mixture was reacted at 70°C for 2 hours. Next, 1.9 parts of dimethylol butanoic acid was added, and the mixture was further reacted while stirring for 3 hours, followed by adding 4.0 parts of MH-PEG#500 (UNIOX M-550 manufactured by NOF Corporation). The mixture was reacted at 70°C for 2 hours, followed by adding 2.4 parts of pentaerythritol, and the mixture was further reacted for 3 hours and then diluted with 50 parts of MEK to terminate the reaction. For the obtained copolymerized polyurethane resin having a solid concentration of 50 wt%, the resin composition, the number average molecular weight and the biomass degree were measured, and the results are shown in Table 1. Moreover, the solution viscosity was measured, and the result is shown in Table 2.

### Comparative Synthesis Example-1: Synthesis of Copolymerized Polyurethane Resin (PLU-5-1)

In a 1 L glass flask equipped with a thermometer, a stirring rod and a condenser, 122 parts of a 82 wt% toluene solution of the hydrophilic polymeric polyol (component A) containing a sulfonic acid group obtained in Example-1 and 40 parts of MEK were added and homogeneously mixed. Then, 11.4 parts of HDI was added and homogeneously mixed, and the system was heated to 70°C. 0.02 parts of dibutyltin dilaurate was added as a reaction catalyst, and the mixture was reacted at 70°C for 2 hours. Next, 1.7 parts of dimethylol propionic acid was added, and the mixture was further reacted while stirring for 3 hours, followed by adding 6 parts of PEG#1000 (UPOL PEG1000 manufactured by Sanyo Chemical Industries, Ltd.). The mixture was reacted at 70°C for 2 hours, followed by adding 1.7 parts of trimethylolpropane, and the mixture was further reacted for 3 hours and then diluted with 59 parts of MEK to terminate the reaction. For the obtained copolymerized polyurethane resin having a solid concentration of 50 wt%, the resin composition, the number average molecular weight and the biomass degree were measured, and the results are shown in Table 1. Moreover, the solution viscosity was measured, and the result is shown in Table 2.

### Comparative Synthesis Example-2: Synthesis of Copolymerized Polyurethane Resin (PLU-5-2)

Synthesis was conducted in the same manner as in the above synthesis of PLU-5-1 except that the amount of HDI was changed to 9.4 parts. For the obtained copolymerized polyurethane resin having a solid concentration of 50 wt%, the resin composition, the number average molecular weight and the biomass degree were measured, and the results are shown in Table 1. Moreover, the solution viscosity was measured, and the result is shown in Table 2.

### Comparative Synthesis Example-3: Synthesis of Copolymerized Polyurethane Resin (PLU-6-1)

In a 1 L glass flask equipped with a thermometer, a stirring rod and a condenser, 122 parts of a 82 wt% toluene solution of the hydrophilic polymeric polyol (component A) containing a sulfonic acid group obtained in Example-1 and 40 parts of MEK were added and homogeneously mixed. Then, 11.0 parts of HDI was added and homogeneously mixed, and the system was heated to 70°C. 0.02 parts of dibutyltin dilaurate was added as a reaction catalyst, and the mixture was reacted at 70°C for 2 hours. Next, 1.7 parts of dimethylol propionic acid was added, the mixture was further reacted while stirring for 3 hours, followed by adding 1.7 parts of trimethylolpropane, and the mixture was further reacted for 3 hours and then diluted with 52 parts of MEK to terminate the reaction. For the obtained copolymerized polyurethane resin having a solid concentration of 50 wt%, the resin composition, the number average molecular weight and the biomass degree were measured, and the results are shown in Table 1. Moreover, the solution viscosity was measured, and the result is shown in Table 2.

### Comparative Synthesis Example-4: Synthesis of Copolymerized Polyurethane Resin (PLU-6-2)

Synthesis was conducted in the same manner as in the above synthesis of PLU-6-1 except that the amount of HDI was changed to 9.0 parts. For the obtained copolymerized polyurethane resin having a solid concentration of 50 wt%, the resin composition, the number average molecular weight and the biomass degree were measured, and the results are shown in Table 1. Moreover, the solution viscosity was measured, and the result is shown in Table 2.

### Comparative Synthesis Example-5: Synthesis of Copolymerized Polyurethane Resin (PLU-7)

In a 1 L glass flask equipped with a thermometer, a stirring rod and a condenser, 122 parts of a 82 wt% toluene solution of the hydrophilic polymeric polyol (component A) containing a sulfonic acid group obtained in Example-1 and 40 parts of MEK were added and homogeneously mixed. Then, 8.2 parts of HDI was added and homogeneously mixed, and the system was heated to 70°C. 0.02 parts of dibutyltin dilaurate was added as a reaction catalyst, and the mixture was reacted at 70°C for 2 hours. Next, 1.7 parts of trimethylolpropane was added, and the mixture was further reacted for 3 hours and then diluted with 48 parts of MEK to terminate the reaction. For the obtained copolymerized polyurethane resin having a solid concentration of 50 wt%, the resin composition, the number average molecular weight and the biomass degree were measured, and the results are shown in Table 1. Moreover, the solution viscosity was measured, and the result is shown in Table 2.

### Example 1: Emulsification of Copolymerized Polyurethane Resin PLU-1-1

In a 1 L four-necked glass flask equipped with a thermometer, a stirring rod and a Liebig condenser tube was placed 200 parts of a 50 wt% MEK solution of the copolymer polyurethane PLU-1-1 obtained in Synthesis Example-1 described above, 25 parts of isopropyl alcohol was added with stirring at 40°C, and the mixture was homogeneously mixed. Thereafter, 200 parts of deionized water was gradually added with stirring while the system was kept at 40°C, and after the total amount was added, the mixture was stirred at the same temperature for 30 minutes, thereby making the system homogeneous. The organic solvent component was then distilled off under reduced pressure while the system was kept at 40°C. The weight of the organic solvent component that was distilled off, the time required for the operation and the average particle size of the obtained emulsion were measured, and the results are shown in Table 2.

### Examples 2 to 7:

The copolymerized polyurethane resins obtained in Synthesis Examples 2 to 7 were emulsified in the same manner as in Example 1, and the results are summarized in Table 2.

### Comparative Examples 1 and 2:

An attempt was made to emulsify the copolymerized polyurethane resins obtained in Comparative Synthesis Examples 1 and 2 in the same manner as in Example 1. Although the organic solvent component was tried to be distilled off under reduced pressure, it was difficult to separate the organic solvent from water, and a large amount of the organic solvent component remained in the flask. As a result, it was impossible to obtain a desired emulsion that does not contain an organic solvent.

### Comparative Examples 3 to 5:

An attempt was made to emulsify the copolymerized polyurethane resins obtained in Comparative Synthesis Examples 3 to 5 in the same manner as in Example 1. However, the MEK solutions having a solid concentration of 50% had a high viscosity and could not be stirred, so that it was impossible to handle them.

### Comparative Examples 6 to 10:

MEK was further added to the MEK solutions having a resin solid concentration of 50% obtained in Comparative Synthesis Examples 1 to 5 to dilute the solid concentration to 40%. The solution viscosities of the obtained 40% MEK solutions were measured, and the results are shown in Table 2.

In a 1 L four-necked glass flask equipped with a thermometer, a stirring rod and a Liebig condenser tube was placed 200 parts of each of the above 40 wt% MEK solutions, 30 parts of isopropyl alcohol was added with stirring at 40°C, and the mixture was homogeneously mixed. Thereafter, 164 parts of deionized water was gradually added with stirring while the system was kept at 40°C, and after the total amount was added, the mixture was stirred at the same temperature for 30 minutes, thereby making the system homogeneous. The organic solvent component was then distilled off under reduced pressure while the system was kept at 40°C. The weight of the organic solvent component that was distilled off, the time required for the operation and the average particle size of the obtained emulsion were measured, and the results are shown in Table 2. As for each of the copolymerized polyurethanes obtained in Comparative Synthesis Examples 1 to 4, while a desired emulsion was obtained from the MEK solution having a solid concentration of 40 wt%, a long time was required for removal of the organic solvent component. Furthermore, the amount of the removed water-containing organic solvent component was 1.5 times larger than those of Synthesis Examples, and such removed component is merely disposed, which is wasteful. As for the copolymerized polyurethane PLU-7 obtained in Comparative Synthesis Example 5, it was impossible to obtain a desired emulsion also from the MEK solution having a solid concentration of 40 wt %.

**[Table 1]**

| Synthesis Example / Comparative Synthesis Example | Copolymerized Polyurethane Resin | Component A | | Component B | | Other components | Component C | | Component D | | Component E | | Biomass degree (%) | Achieved number average molecular weight |
|---|---|---|---|---|---|---|---|---|---|---|---|---|---|---|
| | | Hydrophilic polymeric polyol containing a sulfonic acid group | | Polyether having an active hydrogen only at one end | | Typical PEG (Type of PEG having hydroxyl groups at both ends) | Organic diisocyanate | | Carboxylic acid group-containing diol | | Tri- or higher functional polyol | | | |
| | | A-1 | A-2 | MH-PEG #1000 | MH-PEG # 500 | PEG # 1000 | HDI | IPDI | DMPA | DMBA | TMP | PETOL | | |
| Synthesis Example-1 | PLU-1-1 | 100 | - | 6 | - | - | 11.4 | - | 1.7 | - | 1.7 | - | 44.5 | 38000 |
| Synthesis Example-2 | PLU-1-2 | 100 | - | 6 | - | - | 9.4 | - | 1.7 | - | 1.7 | - | 45.2 | 19000 |
| Synthesis Example-3 | PLU-2 | 100 | - | 9 | - | - | 11.8 | - | 1.7 | - | 1.7 | - | 43.1 | 22000 |
| Synthesis Example-4 | PLU-3 | 100 | - | - | 3.3 | - | 11.4 | - | 1.7 | - | 1.7 | - | 43.2 | 24000 |
| Synthesis Example-5 | PLU-4 | 100 | - | 6 | - | - | 8.9 | - | - | - | 1.6 | - | 46.1 | 25000 |
| Synthesis Example-6 | PLU-5 | - | 100 | 6 | - | - | - | 23.2 | - | 1.9 | - | 2.4 | 42.8 | 20000 |
| Synthesis Example-7 | PLU-6 | - | 100 | - | 4 | - | - | 24.0 | - | 1.9 | - | 2.4 | 43.1 | 22000 |
| Comparative Synthesis Example-1 | PLU-5-1 | 100 | - | - | - | 6 | 11.4 | - | 1.7 | - | 1.7 | - | 45.5 | 42000 |
| Comparative Synthesis Example-2 | PLU-5-2 | 100 | - | - | - | 6 | 9.4 | - | 1.7 | - | L7 | - | 44.5 | 20000 |
| Comparative Synthesis Example-3 | PLU-6-1 | 100 | - | - | - | - | 11.0 | - | 1.7 | - | 1.1 | - | 47.1 | 26000 |
| Comparative Synthesis Example-4 | PLU-6-2 | 100 | - | - | - | - | 9 | - | 1.7 | - | 1.1 | - | 42.3 | 21000 |
| Comparative Synthesis Example-5 | PLU-7 | 100 | - | - | - | - | 8.2 | - | - | - | 1.7 | - | 48.9 | 29000 |

**[Table 2]**

| Example / Comparative Example | Copolymerized Polyurethane Resin | Solution viscosity (Solid concentration: 50%, 25°C) (dPas.) | Result of emulsification step from solution having a solid concentration of 50% | Parts by weight of the distilled off organic solvent component in the emulsification step | Time(minute) required distilling off the organic solvent component |
|---|---|---|---|---|---|
| Example 1 | PLU-1-1 | 230 | Emulsion having average particle size :124nm was obtained. | About 100 | About 30 |
| Example 2 | PLU-1-2 | 41 | Emulsion having average particle size :146nm was obtained. | About 100 | About 30 |
| Example 3 | PLU-2 | 42 | Emulsion having average particle size :149nm was obtained. | About 100 | About 30 |
| Example 4 | PLU-3 | 386 | Emulsion having average particle size :110nm was obtained. | About 100 | About 30 |
| Example 5 | PLU-4 | 248 | Emulsion having average particle size :84nm was obtained. | About 100 | About 30 |
| Example 6 | PLU-5 | 84 | Emulsion having average particle size :56nm was obtained. | About 100 | About 30 |
| Example 7 | PLU-6 | 122 | Emulsion having average particle size :65nm was obtained. | About 100 | About 30 |
| Comparative Example 1 | PLU-5-1 | 491 | Organic solvent component cannot be distilled off efficiency. | | |
| Comparative Example 2 | PLU-5-2 | 67 | Organic solvent component cannot be distilled off efficiency. | | |
| Comparative Example 3 | PLU-6-1 | > 1000 | Emulsion cannot be prepared because of stirring failure. | | |
| Comparative Example 4 | PLU-6-2 | > 1000 | Emulsion cannot be prepared because of stirring failure. | | |
| Comparative Example 5 | PLU-7 | > 1000 | Emulsion cannot be prepared because of stirring failure. | | |
| | | | | | |

| Example / Comparative Example | Copolymerized Polyurethane Resin | Solution viscosity (Solid concentration: 40% ,25°C) (dPas.) | Result of emulsification step from solution having a solid concentration of 40% | Parts by weight of the distilled off organic solvent component in the emulsification step | Time(minute) required distilling off the organic solvent component |
|---|---|---|---|---|---|
| Comparative Example 6 | PLU-5-1 | 102 | Emulsion having average particle size :144nm was obtained. | About 150 | About 50 |
| Comparative Example 7 | PLU-5-2 | 12 | Emulsion having average particle size :152nm was obtained. | About 150 | About 50 |
| Comparative Example 8 | PLU-6-1 | 196 | Emulsion having average particle size :174nm was obtained. | About 150 | About 50 |
| Comparative Example 9 | PLU-6-2 | 89 | Emulsion having average particle size :171nm was obtained. | About 150 | About 50 |
| Comparative Example 10 | PLU-7 | 890 | Organic solvent component cannot be distilled off efficiency. | | |

### INDUSTRIAL APPLICABILITY

The copolymerized polyurethane resin of the present invention can form an aqueous emulsion excellent in storage stability, and may be used in industrial products such as inks, coating agents, adhesives and primers. When an aqueous emulsion containing the copolymerized polyurethane resin of the present invention or an adhesive having the aqueous emulsion as a principal component is used as a heat-seal adhesive, it is expected to contribute to industries as an environmentally friendly adhesive which exhibits excellent heat-seal bonding strength and which can be used for a long period of time with bonding strength retained even after elapse of time.

## Claims

1. A copolymerized polyurethane resin which is obtained by extending a chain length of a prepolymer with a carboxylic acid group-containing diol (component D) and/or a tri- or higher functional polyol (component E), wherein the prepolymer is obtained by a reaction of a hydrophilic polyol (component A) containing a sulfonic acid salt group, a polyether (component B) having an active hydrogen only at one end, and an organic diisocyanate compound (component C), and has at least one isocyanate group in a molecule.

2. The copolymerized polyurethane resin according to claim 1, wherein the component A is an aliphatic polyester polyol obtained by adding an aliphatic hydroxycarboxylic acid composed primarily of an L-lactic acid to a sulfonic acid salt group-containing polyol.

3. The copolymerized polyurethane resin according to claim 1 or 2, which comprises an aliphatic hydroxycarboxylic acid component other than the aliphatic hydroxycarboxylic acid composed primarily of an L-lactic acid, the component being an ε-caprolactone residue or a D-lactic acid residue.

4. The copolymerized polyurethane resin according to any one of claims 1 to 3, which comprises a sulfonic acid salt group having an acid value of not less than 50 eq/ton and not more than 500 eq/ton.

5. The copolymerized polyurethane resin according to any one of claims 1 to 4, wherein a weight fraction of a lactic acid residue in the component A according to claim 1 is not less than 50% and not more than 90%.

6. The copolymerized polyurethane resin according to any one of claims 1 to 5, which has a number average molecular weight of not less than 5000.

7. An aqueous emulsion which is composed primarily of the copolymerized polyurethane resin according to any one of claims 1 to 6 and water.

8. The aqueous emulsion according to claim 7, which does not contain a surfactant.

9. The aqueous emulsion according to claim 7 or 8, which does not contain an organic solvent.

10. An adhesive composition, wherein a curing agent having reactivity to a carboxyl group is blended in the aqueous emulsion according to any one of claims 7 to 9.

11. A method for producing the aqueous emulsion according to any one of claims 7 to 9, comprising the following steps (A) to (C):
(A) polymerizing a copolymerized polyurethane resin in a hydrophilic organic solvent;
(B) adding a basic compound to a hydrophilic organic solvent solution of the obtained resin, followed by mixing; and
(C) distilling off the hydrophilic organic solvent from a system after mixing of water.
